# EUROPÄISCHE PATENTSCHRIFT

(11) **EP 3 071 355 B1**
(45) Veröffentlichungstag und Bekanntmachung des Hinweises auf die Patenterteilung: **22.05.2019**
(21) Anmeldenummer: 14805218.6
(22) Anmeldetag: 20.11.2014
(51) Int. Cl.: B23B 51/10

(54) **KEGELSENKER**
CONICAL COUNTERSINK
FRAISE À CHANFREINER

(30) Priorität: 20.11.2013 DE 102013223700; 28.11.2013 DE 102013224432
(43) Veröffentlichungstag der Anmeldung: 28.09.2016
(73) Patentinhaber: MAPAL Fabrik für Präzisionswerkzeuge Dr. Kress KG, 73431 Aalen (DE)
(72) Erfinder: DREHER, Frank, 72406 Bisingen (DE)
(74) Vertreter: Kordel, Mattias
(86) Internationale Anmeldenummer: PCT/EP2014/075160
(87) Internationale Veröffentlichungsnummer: WO 2015/075127

(56) Entgegenhaltungen:
- US-A- 2 795 979
- US-A1- 2012 034 043

## Beschreibung

Die Erfindung betrifft einen Kegelsenker mit den Merkmalen des Oberbegriffs des Anspruchs 1. Ein solcher Kegelsenker ist aus der US 2,795,979 A bekannt. Kegelsenker der hier angesprochenen Art sind bekannt. Sie werden dazu eingesetzt, den Rand von in Werkstücke eingebrachten Bohrungen zu entgraten und mit einer Fase zu versehen. Diese dient dazu, eine Anlagefläche für ein in die Bohrung eingebrachtes Verbindungselement, sei es eine Schraube mit einem Schraubenkopf oder eine Niete mit einem Nietenkopf bereitzustellen. Kegelsenker weisen einen Grundkörper auf, der mit einer Anzahl von in Umfangsrichtung des Werkzeugs verteilten Schneiden versehen ist. Jeder der Schneiden sind Spanräume zugeordnet, die dazu dienen, von den Schneiden abgetragene Späne des Werkstücks abzuführen. Kegelsenker der hier angesprochenen Art weisen häufig drei derartige Schneiden auf, die in einem gleichen Umfangsabstand angeordnet sind. Es hat sich herausgestellt, dass bei Verwendung eines derartigen Werkzeugs zur Herstellung einer Senkung relativ hohe Anpresskräfte erforderlich sind, die in Richtung der Dreh- beziehungsweise Mittelachse des Kegelsenkers wirken. Bei der Bearbeitung eines Werkstücks treten auch in Richtung der Mittelachse Vibrationen auf, die dazu führen, dass die Oberfläche einer Senkung keine hohe Oberflächengüte aufweist, vielmehr eine Anzahl von Riffeln zeigt. Bei der Herstellung einer Senkung zeigen sich auch Vibrationen, die senkrecht zur Mittelachse des Kegelsenkers wirken. Auch diese führen dazu, dass die Oberfläche der Senkung nicht glatt ist und insbesondere von der Oberfläche eines Kegelstumpfs abweicht, und senkrecht zur Mittelachse verlaufende Vertiefungen aufweist, sodass die Fase keinen kreisförmigen Rand hat. Dies ist insbesondere nachteilig, wenn eine Fase hergestellt wird, die der Abstützung von Verbindungselementen dient, also beispielsweise dem Kopf einer Schraube oder dem einer Niete und an die Anlage der Köpfe hohe Anforderungen gestellt werden. Es ist vorzugsweise vorgesehen, dass die im Anlagebereich konisch ausgebildeten Köpfe flächig an der Senkung anliegen, damit der Verbindung zweier Werkstücke dienende Kräfte gleichmäßig in die Senkung eingeleitete und Belastungsspitzen vermieden werden, die zur Rissbildung führen können.

Aufgabe der Erfindung ist es daher, einen Kegelsenker zu schaffen, der diese Nachteile verhindert.

Diese Aufgabe wird mit Hilfe eines Kegelsenkers der oben genannten Art gelöst, der die Merkmale des Anspruchs 1 aufweist.

Durch die hier definierte Ungleichteilung wird erreicht, dass die zur Herstellung einer Senkung erforderlichen Anpresskräfte deutlich reduziert sind, sodass höhere Taktzeiten bei der Herstellung von Senkungen erreicht werden können, wobei der Kegelsenker geringeren thermischen Belastungen, damit einem geringeren Verschleiß unterliegt, wie dies bei herkömmlichen Kegelsenkern der Fall ist. Auch das Werkstück wird in diesem Fall weniger erwärmt. Wesentlich ist außerdem, dass die Schwingungen sowohl in Richtung der Mittelachse als auch senkrecht dazu wesentlich reduziert sind, sodass sich eine stark verbesserte Oberflächenqualität der Senkung ergibt. Eine Schraube oder eine Niete, die an der Senkung anliegt, bewirkt damit eine wesentlich gleichmäßigere Krafteinleitung, sodass Kraftspitzen sehr weitgehend vermieden werden können.

Es zeigt sich, dass bei der hier vorgegebenen Ungleichteilung die Anpresskräfte gegenüber herkömmlichen Kegelsenkern um mehr als 50% reduziert sind. Darüber hinaus sind die Vibrationen in Richtung der Mittelachse reduziert, ganz besonders aber die Vibrationen, die senkrecht zur Mittelachse wirken. Dieser Kegelsenker zeichnet sich also dadurch aus, dass Senkungen mit besonders hoher Oberflächengüte und sehr geringer Unrundheit erzeugt werden können.

Diese Aufgabe wird auch mit Hilfe eines Kegelsenkers mit den Merkmalen des Anspruchs 1 gelöst. Es hat sich herausgestellt, dass bei dieser Art Ungleichteilung der Winkel α, β und γ die Anpresskräfte gegenüber herkömmlichen Kegelsenkern wesentlich reduziert sind, ebenso die Vibrationen des Kegelsenkers bei Bearbeitung eines Werkstücks in Richtung der Mittelachse gesehen. Diese hier gewählte Ungleichteilung führt auch dazu, dass die Vibrationen senkrecht zur Mittelachse besonders stark reduziert werden. Die mit diesem Kegelsenker bearbeiteten Senkungen zeigt sich durch besonders hohe Oberfläche und sehr geringe Unrundheit aus. Bei dieser letztgenannten Ungleichteilung liegt noch ein Vorteil darin, dass die Schwingungsanregung nicht so leicht in der Resonanzfrequenz des Gesamtsystems liegen kann.

Die Erfindung wird im Folgenden anhand der Zeichnung näher erläutert:
Es zeigen
- Figur 1: ein erstes nicht erfindungsgemäßes Beispiel eines Kegelsenkers in skizzierter Draufsicht auf dessen Bearbeitungsseite;
- Figur 2: ein zweites nicht erfindungsgemäßes Beispiel eines Kegelsenkers in skizzierter Draufsicht und
- Figur 3: ein erstes Ausführungsbeispiel eines erfindungsgemäßen Kegelsenkers in skizzierter Draufsicht.

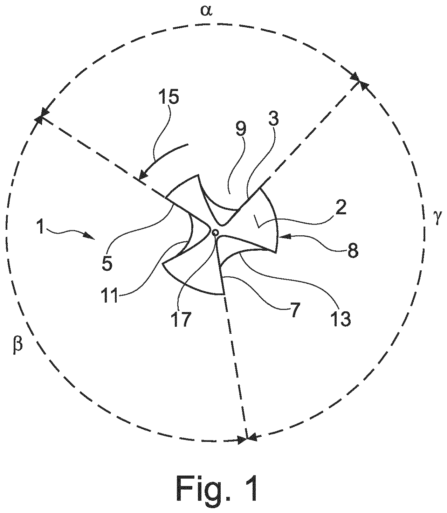

Figur 1 zeigt ein erstes Beispiel eines Kegelsenkers 1 in skizzierter Draufsicht auf die kegelförmig ausgebildete Bearbeitungsseite 2 des Werkzeugs. Es weist drei in Umfangsrichtung in einem Abstand zueinander angerordnete Schneiden 3, 5 und 7 auf, die an einem Grundkörper 8 des Kegelsenkers 1 vorgesehen sind und denen jeweils ein Spanraum 9, 11 und 13 zugeordnet ist. In den Spanraum 9 gelangen von der Schneide 3 abgetragene Späne, entsprechend gelangen Späne, die von den Schneiden 5 und 7 abgetragen werden, in die Spanräume 11 und 13. Es wird hier davon ausgegangen, dass der Kegelsenker 1 bei der Herstellung einer Senkung in einem Werkstück in Richtung des Pfeils 15 rotiert und mit den an der Bearbeitungsseite 2 vorgesehenen Schneiden 3, 5, 7 in Eingriff mit dem Werkstück tritt. Durch einen Punkt ist die Mittelachse 17 des Kegelsenkers 1 angedeutet, um den sich dieser in Richtung des Pfeils 15 dreht.

Der Kegelsenker wird bei der Bearbeitung eines Werkstücks mit der Spitze der kegelförmigen Bearbeitungsseite 2 voran in ein bestehendes Loch in einem Werkstück eingeführt. Dabei ist der Durchmesser des Kegelsenkers 1 größer als der Durchmesser des Lochs, sodass mittels des Kegelsenkers 1 eine das Loch umgebende auch als Fase bezeichnete Senkung hergestellt wird.

Der Kegelsenker 1 wird in der Regel mittels einer Werkzeugmaschine in Rotation versetzt. Dazu weist der Grundkörper 8 auf seiner der Bearbeitungsseite 2 abgewandten Seite vorzugsweise einen senkrecht in die Bildebene von Figur 1 verlaufenden Schaft auf, dessen Mittelachse konzentrisch zur Mittelachse 17 verläuft und über den der Kegelsenker 1 mit einem Drehmoment beaufschlagt wird. Der Schaft kann beispielsweise zylindrisch ausgebildet sein. Letztlich ist es aber für den Grundgedanken der hier vorliegenden Erfindung belanglos, wie der Kegelsenker 1 zur Erzeugung einer Senkung in einem Werkstück in Rotation versetzt und mit einem Drehmoment beaufschlagt wird.

Die Schneiden 3, 5 und 7 sind - in Umfangsrichtung gesehen - nicht in gleichen Winkelabständen zueinander angeordnet. Grundsätzlich ist vorgesehen, dass ein von der Mittelachse 17 aus gemessener Winkel α zwischen der ersten Schneide 3 und der zweiten Schneide 5 90° bis 110° beträgt, dass ein von der Mittelachse 17 aus gemessener Winkel β zwischen der zweiten Schneide 5 und der dritten Schneide 7 100° bis 140° beträgt, und dass ein von der Mittelachse 17 aus gemessener Winkel γ zwischen der dritten Schneide 7 und der ersten Schneide 3 120° bis 160° beträgt. Dabei gilt die folgende Beziehung: α < β < γ. Darüber hinaus ist bei der Wahl der Winkel α, β, γ darauf zu achten, dass die Summe der drei Winkel 360° beträgt.

Bei dem in Figur 1 dargestellten ersten nicht erfindungsgemäßen Beispiel ist vorgesehen, dass der Winkel α 100°, der Winkel β 130° und auch der Winkel γ 130° beträgt. Die Ungleichteilung der Winkelabstände liegt also darin, dass zwar die Winkel β und γ gleich sind, dass aber der Wert des Winkels α von dem der Winkel β und γ abweicht.

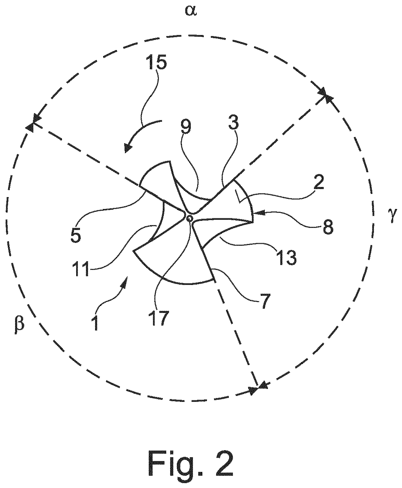

Figur 2 zeigt ein zweites nicht erfindungsgemäßes Beispiel eines Kegelsenkers 1 in skizzierter Draufsicht auf dessen Bearbeitungsseite 2. Gleiche und funktionsgleiche sind mit gleichen Bezugsziffern versehen, sodass insofern auf die Beschreibung zu Figur 1 verwiesen wird.

Das zweite Beispiel gemäß Figur 2 unterscheidet sich vom dem ersten Beispiel, wie es in Figur 1 dargestellt ist, darin, dass die Schneiden 2, 3 und 5 zwar ebenfalls - in Umfangsrichtung gesehen - mit ungleicher Teilung am Grundkörper 8 angeordnet sind und dass der Winkel α 100° beträgt. Abweichend zum ersten Beispiel beträgt der Winkel β 110° und der Winkel γ 150°. Auch hier gilt α < β < γ und α + β + γ = 360°.

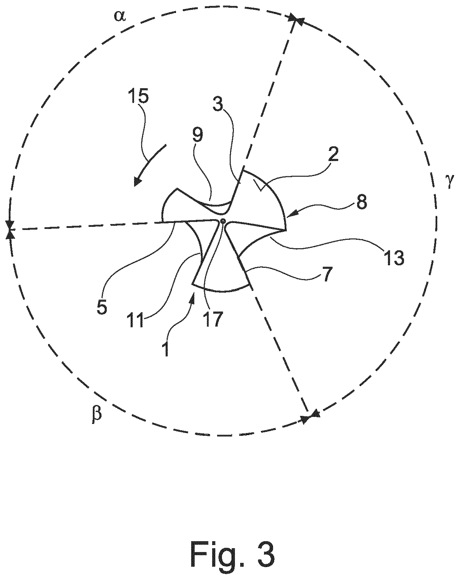

Figur 3 zeigt ein erstes Ausführungsbeispiel eines Kegelsenkers 1 in skizzierter Draufsicht auf die kegelförmige Bearbeitungsseite 2 des Kegelsenkers 1. Gleiche und funktionsgleiche Teile sind wiederum mit gleichen Bezugsziffern versehen, sodass auf die vorangegange Beschreibung verwiesen wird.

Der Kegelsenker 1 nach Figur 3 weist, wie die beiden Beispiele gemäß Figur 1 und 2 eine Ungleichteilung bezüglich der in Umfangsrichtung in einem Abstand zueinander angeordneten Schneiden 3, 5 und 7 auf, denen, wie bei den oben beschriebenen Kegelsenkern 1 jeweils ein Spanraum 9, 11, 13 zugeordnet ist. Bei der Bearbeitung eines Werkstücks wird der Kegelsenker 1 in Richtung des Pfeils 15 um die Mittelachse 17 gedreht, sodass die Schneiden 3, 5, 7 Späne von einem Werkstück abnehmen, um eine Senkung mit kegelabschnittsmantelförmiger Oberfläche, also eine die Bohrung umgebende Fase herzustellen, die von ihrem äußeren Rand aus in Richtung auf die Mittelachse der Bohrung abfällt. Bei dem ersten Ausführungsbeispiel nach Figur 3 ist vorgesehen, dass die erste Schneide und die zweite Schneide 5 einen Winkel α einschließen, die zweite Scheide 5 und die dritte Schneide 7 einen Winkel β und die dritte Schneide 7 und die erste Schneide 1 einen Winkel γ. Die Winkel α, β und γ sind, wie bei dem zweiten Beispiel alle verschieden ausgelegt. Dabei beträgt der Winkel α, wie bei den anderen Ausführungsbeispielen 100°, der Winkel β beträgt allerdings 120° und der Winkel γ 140°. Es gilt also α < β < γ, außerdem α + β + γ = 360°.

Durch Abwandlung des in Figur 3 dargestellten ersten Ausführungsbeispiels ergibt sich ein hier nicht dargestelltes zweites Ausführungsbeispiel, bei welchem der Winkel α 101° beträgt, der Winkel β 120° und der Winkel γ 139°. Es ist her also vorgesehen, dass für die Winkel α und γ Werte gewählt werden, die Primzahlen sind.

Um einen hier nicht dargestellten weiteren Kegelsenker 1 zu realisieren, kann das in Figur 3 dargestellte erste Ausführungsbeispiel dadurch abgewandelt werden, dass der Winkel α 101°, der Winkel β 139° und der Winkel γ 120° beträgt. Hier werden, wie bei dem dritter Ausführungsbeispiel, Primzahlen für Werte von zwei Winkeln gewählt, hier allerdings für die Winkel α und β.Es hat sich herausgestellt, dass bei der Herstellung von Senkungen in Werkstücken mittels eines bekannten Kegelsenkers mit Schneiden, die in gleichem Umfangsabstand von 120° zueinander angeordnet sind, hohe Anpresskräfte erforderlich sind, die beispielsweise im Bereich von über 750 N liegen. Dies führt dazu, dass sich das bearbeitete Werkstück, aber auch der Kegelsenker bei der Herstellung von Senkungen relativ stark erwärmen. Dies führt zu einem erhöhten Verschleiß des Kegelsenkers aber auch zu einer Versprödung des bearbeiteten Werkstücks, sodass bereits deshalb mit einer erhöhten Rissbildung im Bereich der Senkung zur rechnen ist, wenn diese mit dem Kopf einer Schraube oder einer Niete zusammenwirkt.

Darüber hinaus hat es sich gezeigt, dass bei herkömmlichen Kegelsenkern die Vibrationen in Richtung der Dreh- beziehungsweise Mittelachse des Werkzeugs Unebenheiten in der Oberfläche der Senkung entstehen. Diese weist aufgrund der hier angesprochenen Vibrationen Riffeln auf, die an dem Kopf einer Schraube beziehungsweise Niete anliegen und Spannkräfte aufnehmen. Im Bereich der Riffeln wirken also Kraftspitzen, die ihrerseits zu Rissen in dem Werkstück führen können.

Darüber hinaus ergeben sich bei der Herstellung von Senkungen Vibrationen senkrecht zur Mittelachse des Werkzeugs. Dieses wird also senkrecht zur Mittelachse ausgelenkt, sodass die Oberfläche der Senkung von der Oberfläche eines Kegelstumpfabschnitts abweicht. Es gibt also Bereiche, die in einer Richtung senkrecht zur Mittelachse 17 einen größeren Abstand zur Mittelachse aufweisen und in entgegengesetzter Richtung einen kleineren Abstand, sodass sich keine gleichmäßige Senkungsoberfläche ergibt. Auch dieser Effekt führt dazu, dass der Kopf einer Schraube oder Niet nicht optimal an der Senkung anliegt und beim Verspannen des Werkstücks des Schrauben- beziehungsweise Nietkopfs Spannungsspitzen auftreten, die Risse bewirken.

Die unebene beziehungsweise ungleiche Oberfläche der Senkung führt darüber hinaus dazu, dass der Anlagebereich des Schraubenbeziehungsweise Nietkopfs nicht dicht ist, sodass Umwelteinflüsse die Verspannung des Werkzeugs beeinträchtigen können. Außerdem können Gase und/oder Flüssigkeiten über die Senkung hinweg in das Schrauben- beziehungsweise Nietloch hineingelangen oder von dort nach außen dringen.

Es hat sich herausgestellt, dass durch die oben angegebene Wahl der Winkel α, β und γ zur Erreichung einer Ungleichteilung zum einen zu einer reduzierten Anpresskraft und zum anderen zu reduzierten Vibrationen sowohl in Richtung der Mittelachse als auch quer dazu führt.

Es zeigt sich, dass die Anpresskräfte und die Vibrationen ausgehend von dem ersten Beispiel gemäß Figur 1 beim zweiten Beispiel gemäß Figur 2 reduziert sind, und dass diese Werte bezüglich der Anpresskraft und der Vibrationen bei dem ersten Ausführungsbeispiel gemäß Figur 3 besonders stark reduziert sind, sodass sich mit dem ersten Ausführungsbeispiel gemäß Figur 3 des Kegelsenkers 1 besonders hochwertige Senkungen erzielen lassen. Deren Oberfläche weist allenfalls sehr geringe Riffeln und außerdem nur kleine Abweichungen in radialer Richtung bezüglich der Mittelachse 17 auf. Die Anpresskräfte sind bei dem ersten Beispiel wesentlich geringer und betragen lediglich noch ca. 450 N (im Vergleich zu den oben angegebenen 750 N). Bei dem zweiten Beispiel liegen die Anpresskräfte bei ca. 380 N und bei dem ersten Ausführungsbeispiel des Kegelsenkers bei ca. 300 N. Bei dem zweiten Ausführungsbeispiel, das oben in Zusammenhang mit Figur 3 erläutert wurde und auch für den weiteren abgewandelten Kegelsenker, der in Zusammenhang mit Figur 3 erläutert wurde, ergeben sich eher noch geringere Anpresskräfte als bei dem ersten Ausführungsbeispiel.

## Patentansprüche

1. Kegelsenker (1) mit
- einem eine Mittelachse (17) aufweisenden Grundkörper (8),
- drei geometrisch definierten Schneiden (3,5,7),
- denen jeweils ein Spanraum (9,11,13) zugeordnet ist,
**dadurch gekennzeichnet, dass**
a) der Winkel α zwischen einer ersten Schneide (3) und einer zweiten Schneide (5) 100°,
der Winkel β zwischen der zweiten Schneide (5) und einer dritten Schneide (7) 120° und
der Winkel γ zwischen der dritten (7) und der ersten Schneide (3) 140° beträgt, wobei gilt α < β < γ und α + β + γ = 360°, oder dass
b) der Winkel α zwischen einer ersten Schneide (3) und einer zweiten Schneide (5) 101°,
der Winkel β zwischen der zweiten Schneide (5) und einer dritten Schneide (7) 120° und
der Winkel γ zwischen der dritten Schneide (7) und der ersten Schneide (3) 139° beträgt, wobei gilt α < β < γ und α + β + γ = 360°.

## Claims

1. Countersink (1) with
- a base body (8) having a central axis (17),
- three geometrically defined cutting edges (3,5,7),
- each of which is assigned a chip space (9, 11, 13),
**characterised in that**
a) the angle α between a first cutting edge (3) and a second cutting edge (5) is 100°,
the angle β between the second cutting edge (5) and a third cutting edge (7) is 120°, and
the angle γ between the third (7) and the first cutting edge (3) is 140°, where α < β < γ and α + β + γ = 360°, or that
b) the angle α between a first cutting edge (3) and a second cutting edge (5) is 101°,
the angle β between the second cutting edge (5) and a third cutting edge (7) is 120°, and
the angle γ between the third cutting edge (7) and the first cutting edge (3) is 139°, where α < β < γ and α + β + γ = 360°.

## Revendications

1. Fraise à chanfreiner (1) avec
- un corps de base (8) ayant un axe central (17),
- trois arêtes de coupe géométriquement définies (3,5,7),
- chacun d'entre eux se voit attribuer un espace pour les puces (9, 11, 13),
**caractérisé en ce que**
a) l'angle α entre une première arête de coupe (3) et une deuxième arête de coupe (5) est de 100°,
l'angle β entre la deuxième arête de coupe (5) et une troisième arête de coupe (7) est de 120°, et
l'angle γ entre le troisième (7) et le premier tranchant (3) est de 140°, α < β < β < γ et α + β + β + γ = 360°, ou que
b) l'angle α entre une première arête de coupe (3) et une deuxième arête de coupe (5) est de 101°,
l'angle β entre la deuxième arête de coupe (5) et une troisième arête de coupe (7) est de 120°, et
l'angle γ entre le troisième tranchant (7) et le premier tranchant (3) est de 139°, où α < β < γ et α + β + β + γ = 360°.
